(19) Europäisches Patentamt

European Patent Office

Office européen des brevets

(11) **EP 3 574 768 B1**

(12) **EUROPEAN PATENT SPECIFICATION**

(45) Date of publication and mention
of the grant of the patent:
**13.10.2021 Bulletin 2021/41**

(51) Int Cl.:
*A23L 2/38* (2021.01)          *A23L 2/60* (2006.01)
*A23L 2/58* (2006.01)          *C12G 3/00* (2019.01)
*C12C 5/04* (2006.01)

(21) Application number: **19180973.0**

(22) Date of filing: **03.02.2017**

(54) **BEVERAGE WITH REDUCED COLOUR FADING**

GETRÄNK MIT VERMINDERTER FARBVERBLASSUNG

BOISSON À DÉGRADATION DE COULEUR ATTÉNUÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2016 JP 2016072007**

(43) Date of publication of application:
**04.12.2019 Bulletin 2019/49**

(62) Document number(s) of the earlier application(s) in
accordance with Art. 76 EPC:
**17773656.8 / 3 284 350**

(73) Proprietor: **Suntory Holdings Limited
Kita-ku, Osaka-shi
Osaka 530-8203 (JP)**

(72) Inventors:
• **IZUMI, Akiko
Kawasaki, Kanagawa 2110067 (JP)**
• **URAI, Soichiro
Kawasaki, Kanagawa 2110067 (JP)**
• **NISHIBORI, Tomoyuki
Kawasaki, Kanagawa 2110067 (JP)**
• **NAGAO, Koji
Kawasaki, Kanagawa 2110067 (JP)**

(74) Representative: **Mewburn Ellis LLP
Aurora Building
Counterslip
Bristol BS1 6BX (GB)**

(56) References cited:
**WO-A1-2014/186250**

• **INDRA PRAKASH ET AL: "Development of Next
Generation Stevia Sweetener: Rebaudioside M",
FOODS, vol. 3, no. 1, 27 February 2014
(2014-02-27), pages 162-175, XP055309887, DOI:
10.3390/foods3010162**

**Description**

TECHNICAL FIELD

The present invention relates to a beverage wherein the fading of a caramel colouring in the beverage is reduced.

BACKGROUND ART

In order to address diversifying consumer needs, various beverages are developed and commercially available. Saccharides such as sucrose are components extremely ordinarily blended in beverages for the purposes of giving sweetness, and the like, but the influence of excess intake on health has been pointed out, and there are needs for low calorie beverages. Needs for naturally derived materials are also increasing. In order to meet these needs, naturally derived sweeteners having a high degree of sweetness compared with saccharides are attracting attention. Patent Literature 1 discloses a functional sweetener composition containing a vitamin, a high intensity sweetener, and a sweetness-improving composition.

Citation List

Patent Literature

Patent Literature 1: National Publication of International Patent Application No. 2009-517043 INDRA PRAKASH ET AL: "Development of Next Generation Stevia Sweetener: Rebaudioside M", FOODS, vol. 3, no. 1, 27 February 2014 (2014-02-27), pages 162-175 discloses a study of the properties of RebM and its use as sweetener. This steviol glycoside possesses a clean, sweet taste with a slightly bitter or licorice aftertaste. A blend of RebM and RebA having a RebM/RebA ratio of 3/1 is specifically disclosed. WO 2014/186250 A1 discloses a food product, preferably a carbonated beverage, comprising a sweetening amount of RebM and at least one other food ingredient, preferably RebA. The use of RebM in combination with RebA has been found to provide cost-effective sweetening without the expected bitterness typically associated with the use of RebA. Caramel colouring may be added to the beverage.

SUMMARY OF INVENTION

Technical Problem

One of the natural sweeteners is a stevia extract, and the inventors of this application have conducted a study on the use of stevia extracts in beverages. In the course of the study, a problem was revealed that when a stevia extract is blended into a beverage containing caramel colouring, the fading of the caramel colouring in the beverage further progresses. As natural sweeteners, Stevioside, rebaudiosides (hereinafter referred to as "Reb"), and the like as the sweet components of stevia extracts are known, and the details will be described later.

The present invention has been made in view of the above-described problem and has an object to provide a beverage wherein fading of a caramel colouring is reduced in spite of a stevia extract being blended.

Solution to the Problem

The present inventors conducted extensive studies to solve the above problem and surprisingly found that, of the stevia extracts, when a ratio of a content of RebA to a content of RebD and/or RebM is adjusted to a predetermined range, the fading of a caramel colouring in the beverage is reduced. Based on the finding, the present inventors completed the present invention, which is defined in the appended set of claims.

The invention provides a beverage meeting the following conditions (A) and (B):

(A)

    (i) a ratio of a content of RebD to a content of RebA is 1 to 20; or
    (ii) a ratio of content of RebM to a content of RebA is 2.2 to 9.5, and

(B) a caramel colouring is contained such that Lab values of the beverage are respectively L: 45 to 55, a: 10 to 20 and b: 25 to 35.

In some embodiments, the ratio of the condition (A) (ii) is 2.2 to 2.8.

In some embodiments, the caramel colouring is caramel IV.

In some embodiments, Brix (in terms of sucrose) of the beverage is 1 to 15.

A method for reducing fading of a caramel colouring in a beverage may comprise the steps of:

(A)

(i) adjusting a ratio of a content of RebD to a content of RebA to be 1 to 20; or
(ii) adjusting a ratio of content of RebM to a content of RebA to be 2.2 to 9.5, and

(B) adding caramel colouring so that Lab values of the beverage are respectively L: 45 to 55, a: 10 to 20 and b: 25 to 35.

Also disclosed herein is a beverage wherein fading of a caramel colouring is reduced, the beverage meeting the following conditions (A) to (E):

(A) a ratio of a content of RebM to a content of RebA is 2.4 to 9.5,
(B) Lab values of the beverage are respectively L: 45 to 55, a: 10 to 20 and b: 25 to 35,
(C) a content of the caramel colouring is 0.01 to 0.5 wt% (w/w),
(D) Brix of the beverage is 1 to 15, and
(E) a ratio of a difference in Lab values between after light irradiation at 55000 lux for 15 hours and 15 minutes has been carried out and before the light irradiation is carried out: $((L2-L1)^2 + (a2-a1)^2 + (b2-b1)^2)^{1/2}$
(wherein:

L1 is the L value before light irradiation, L2 is the L value after light irradiation,
a1 is the a value before light irradiation, a2 is the a value after light irradiation,
b 1 is the b value before light irradiation, b2 is the b value after light irradiation)

to a difference in Lab values between before and after the light irradiation of a control (an aqueous solution containing a caramel colouring at a concentration of 2960 mg/L) is 0.99 to 1.01.

The caramel colouring may be caramel IV.

In the beverage wherein fading of a caramel colouring is reduced, a content of RebA in the beverage may be 1 to 30 ppm.

A content of RebM in the beverage wherein fading of a caramel colouring is reduced may be 10 to 550 ppm.

Lab values of the beverage wherein fading of a caramel colouring is reduced may be respectively L: 47 to 53, a: 16 to 20, and b: 29 to 34.

A method for reducing fading of a caramel colouring in the beverage may comprise the steps of:

(A) (ii) adjusting a ratio of a content of RebM to a content of RebA to be 2.4 to 9.5, and
(B) adjusting Lab values of the beverage to be respectively L: 45 to 55, a: 10 to 20 and b: 25 to 35,
(C) adjusting a content of caramel colouring to be 0.01 to 0.5 wt% (w/w), and
(D) adjusting Brix of the beverage to be 1 to 15.

Embodiments of the present invention provide a beverage meeting the following conditions (A) and (B):

(A)

(i) a ratio of a content of RebD to a content of RebA is 1 to 20; or
(ii) a ratio of content of RebM to a content of RebA is 2.2 to 9.5, and

(B) caramel colouring is contained so that Lab values of the beverage are respectively L: 45 to 55, a: 10 to 20 and b: 25 to 35.

## ADVANTAGEOUS EFFECTS OF THE INVENTION

According to the present invention, a beverage wherein fading of a caramel colouring is reduced can be provided.

## BRIEF DESCRIPTION OF DRAWINGS

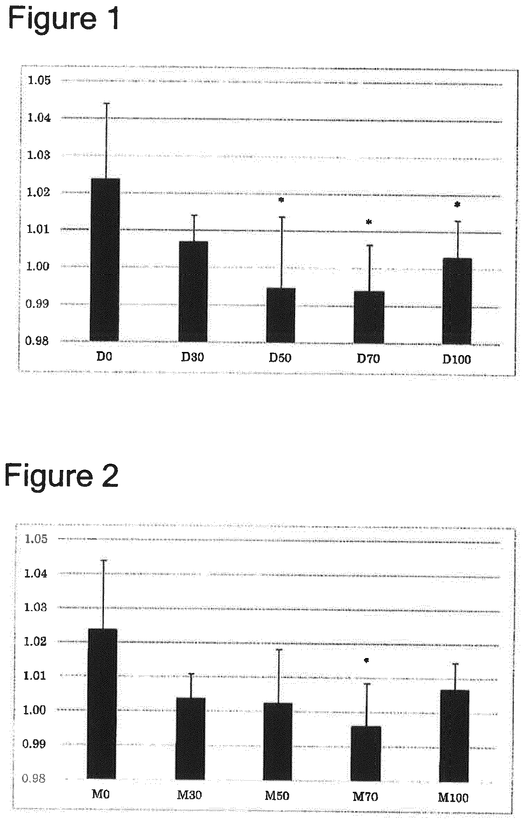

Figure 1 is a graph showing caramel colouring fading reduction effects when a ratio of a content of RebD to a content of RebA is adjusted. For example, D0 means a beverage sample in which RebD is not contained and only RebA is contained (that is, 100%). Additionally, D70 means a beverage sample containing 70% of RebD and 30% of RebA in Brix ratio in terms of sucrose.

Figure 2 is a graph showing caramel colouring fading reduction effects when a ratio of a content of RebM to a content of RebA is adjusted. For example, M100 means a beverage sample in which RebA is not contained and only RebM is contained (that is, 100%). Additionally, M50 means a beverage sample containing 50% of each of RebA and RebM in Brix ratio in terms of sucrose.

DESCRIPTION OF EMBODIMENTS

The beverages according to the embodiment of the present invention will be described below.

A beverage according to the embodiment of the present invention is a beverage meeting the following conditions (A) and (B):

(A) (i) a ratio of a content of RebD to a content of RebA is 1 to 20; or (ii) a ratio of content of RebM to a content of RebA is 2.2 to 9.5, and
(B) a caramel colouring is contained so that Lab values of the beverage are respectively L: 45 to 55, a: 10 to 20, and b: 25 to 35.

Reb (rebaudioside) is known as a sweet component contained in stevia extracts. The stevia extract is obtained by extraction from stevia dry leaves and purification. Stevia is an Asteraceae perennial plant native to Paraguay in South America, and its scientific name is Stevia rebaudiana Bertoni. Stevia comprises a component having about 300 times or more the sweetness of sugar and therefore is grown in order to extract this sweet component and use it as a natural sweetener. As Rebs, RebA, RebB, RebC, RebD, and RebE are known. Further, recently, the presence of various glycosides such as RebM described in National Publication of International Patent Application No. 2012-504552 have been reported. Among various Rebs, RebA is evaluated as a sweetener having a high degree of sweetness and good sweetness and is widely used. In the embodiment of the present invention, as stevia extracts, RebA, RebD, and RebM are focused on. RebA, RebD, and RebM are available on the market and can also be synthesized by an organic chemical method. Alternatively, using a stevia extract as a starting raw material, RebA, RebD, and RebM can also be separated and purified. For example, RebA can be purified according to the method described in National Publication of International Patent Application No. 2009-517043, RebD can be purified according to the method described in US8414949, and RebM can be purified according to the method described in Foods 2014, 3(1), 162-175; doi: 10.3390/foods3010162. RebA, RebD and RebM may be analysed by any method and can be analysed, for example, by high performance liquid chromatograph (HPLC) set under conditions described in National Publication of International Patent Application No. 2012-504552. RebA, RebD and RebM are analysed herein by that method, unless otherwise described.

In a beverage according to the embodiment of the present invention, RebA and RebD and/or RebM are blended at a particular content ratio. Specifically, the ratio of a content of RebD and/or RebM to a content of RebA ((RebD and/or RebM)/RebA) is 0.45 or more. When such a ratio is less than 0.45, the effect to reduce the fading of a caramel colouring in the beverage tends to be diminished. Note that "RebD and/or RebM" used herein means that both of RebD and RebM may be contained, or either one of RebD or RebM may be contained. Thus, the above content ratio can respectively be any of

(i) the ratio of a total content of RebD and RebM to a content of RebA,
(ii) the ratio of a content of RebD to a content of RebA, and
(iii) the ratio of a content of RebM to a content of RebA.

In a beverage according to the embodiment of the present invention, the ratio of a content of RebD to a content of RebA is 1 to 20, preferably 2.4 or more. The ratio of a content of RebD to a content of RebA may be a further greater numerical value and, for example, 5 or more, or 10 or more. The ratio of a content of RebM to a content of RebA is 2.2 to 9.5, preferably 2.4 or more. The ratio of a content of RebM to a content of RebA can be, for example, 5 or more.

As an embodiment, the ratio of a content of RebD to a content of RebA is 1 to 20, for example, 9.5 or less, more preferably 4.2 or less. The ratio of a content of RebM to a content of RebA is 2.2 to 9.5, preferably 4.2 or less. The ratio of a content of RebD to a content of RebA ranges preferably from 1 to 9.5, more preferably 2.2 to 2.8, but not limited thereto. The ratio of a content of RebM to a content of RebA ranges more preferably 2.2 to 2.8, but not limited thereto.

The above content ratios herein can be converted to a Brix ratio (in terms of sucrose). RebA has 300 times, RebD has 285 times and RebM has 285 times the degree of sweetness of sucrose. The Brix ratio (in terms of sucrose) can be calculated from a degree of sweetness of Reb as compared to sucrose and a content of Reb. Accordingly, the Brix ratio in terms of sucrose can be calculated using a numerical value of 300 times a content of RebA, a numerical value of 285 times a content of RebD, and a numerical value of 285 times a content of RebM. Conversely, the above mass ratios can also be determined from the Brix ratio (in terms of sucrose) based on this calculation method. Note that the amount equivalent to Brix 1 in terms of sucrose is 33.3 ppm for RebA, 35.1 ppm for RebD, and 35.1 ppm for RebM.

The inventors of this application found for the first time that RebA is involved in a progress of the caramel colouring fading in beverages containing stevia extracts. The embodiment of the present invention, in caramel colouring-containing beverages, is to reduce the fading of such a colouring by decreasing a content of RebA as the stevia extract. The content of RebA in the beverage is, for example, 350 ppm or less, preferably 300 ppm or less, more preferably 250 ppm or less, 200 ppm or less, 150 ppm or less, 100 ppm or less, 50 ppm or less, or 30 ppm or less, but not limited thereto. RebA may be contained in the beverage to a degree that sweetness is slightly felt and, for example, at 1 ppm or more, preferably 5 ppm or more, more preferably 10 ppm or more. The "ppm" used herein means weight/volume (w/v) ppm, unless otherwise described.

As described above, when the content of RebA as the stevia extract in the beverage is simply decreased, the sweetness derived from the stevia extract cannot be sufficiently imparted to the beverage. The inventors of this application found for the first time that RebD and/or RebM makes it harder than RebA for the fading of a caramel colouring to progress. Specifically, the embodiment of the present invention responds to the issue of the fading in the caramel colouring-containing beverages by replacing RebA with RebD and/or RebM as the stevia extract while enabling to impart substantial sweetness derived from the stevia extract. In a beverage embodying the present invention, the content of RebD or RebM can be the amount required as substitute for RebA. As described above, a beverage in the embodiment of the present invention can contain RebD and RebM singly or in combination. When RebD or RebM is singly contained, the content of RebD or RebM in the beverage is not particularly limited but is, for example, 10 to 550 ppm, preferably 30 to 500 ppm, more preferably 50 to 500 ppm. When both RebD and RebM are contained, the total amount of RebD and RebM is not particularly limited but is, for example, 10 to 550 ppm, preferably 30 to 500 ppm, more preferably 50 to 500 ppm.

In a beverage embodying the present invention, the degree of sweetness can be adjusted so that moderate sweetness can be felt, but not limited thereto. For such a degree of sweetness, for example, Brix (in terms of sucrose) of the beverage according to the embodiment of the present invention is 1 to 15. Such a Brix can be suitably set in accordance with the use condition of the beverage and set within a range from, for example, 3 to 13, or 7 to 13. Additionally, the Brix can be set within a low range or a high range and can be, in such an instance, for example, 5 or less (e.g. 1 to 5), 4 or less (e.g. 1 to 4), 3 or less (e.g. 1 to 3), 2 or less (e.g. 1 to 2), or 10 or more (e.g. 10 to 15), 11 or more (e.g. 11 to 15), 12 or more (e.g. 12 to 15), 13 or more (e.g. 13 to 15), 14 or more (e.g. 14 to 15). The Brix (in terms of sucrose) of the beverage according to the embodiment of the present invention may be adjusted only by the total content of RebA, RebD, and RebM, or may be adjusted as the total value of the entire sweeteners using a sweetener other than RebA, RebD, and RebM.

A beverage embodying the present invention contains a caramel colouring. Here, as the caramel colouring, a known edible caramel colouring can be used. For example, a substance obtained by heat-treating an edible carbohydrate typified by sugar or glucose, one obtained by adding an acid or an alkali and heat-treating an edible carbohydrate, and the like can be used as the caramel colouring. In addition, a sugar contained in a fruit juice or a vegetable juice can also be caramelized and used, and in this case, the sugar can be caramelized by heat treatment, treatment with an acid or an alkali, or the like.

In the present invention, various classes of caramels such as caramel I, caramel II, caramel III and caramel IV can be used as the caramel colouring. Caramels of each class (I to IV) are classified based on the presence or absence of a treatment using a sulfurous acid compound and an ammonium compound at the time of producing the caramel colouring. Specifically, caramel I is the caramel colouring obtained by heat-treating an edible carbohydrate without using a sulfurous acid compound and an ammonium compound, caramel II is the caramel colouring obtained by heat-treating an edible carbohydrate without using an ammonium compound but using a sulfurous acid compound, caramel III is the caramel colouring obtained by heat-treating an edible carbohydrate without using a sulfurous acid compound but using an ammonium compound, and caramel IV is the caramel colouring obtained by heat-treating an edible carbohydrate using both of a sulfurous acid compound and an ammonium compound. In a beverage according to the embodiment of the present invention, caramel IV is preferably contained but not particularly limited thereto.

In a beverage according to the embodiment of the present invention, Lab values of the beverage are respectively L: 45 to 55, a: 10 to 20, and b: 25 to 35, and the beverage colour can be adjusted in such a way that Lab values are to be such values. The above Lab values are preferably L: 47 to 53, a: 16 to 20, and b: 29 to 34. The Lab values of a beverage according to the embodiment of the present invention can be adjusted by the content of the caramel colouring. Specifically, a beverage according to the embodiment of the present invention can contain the caramel colouring so that Lab values of the beverage are respectively L: 45 to 55, a: 10 to 20, b: 25 to 35.

In a beverage embodying the present invention, Lab values of the beverage can be measured using a measurement apparatus known by those skilled in the art. As a specific example, Lab values can be measured using a spectrophotometer (colorimeter) SE6000, a product of Nippon Denshoku Industries Co., Ltd., as illustrated later in Test Examples, but not limited thereto.

Further, in a beverage embodying the present invention, the content of the caramel colouring can be specified by the concentration. In that case, a content of the caramel colouring in the beverage can be 0.01 to 0.5 wt% (w/w), preferably 0.03 to 0.5 wt% (w/w), more preferably 0.05 to 0.4 wt% (w/w), but not limited thereto.

In a beverage embodying the present invention, the method for measuring the content of the caramel colouring is not limited and the content can be measured using gas chromatography, HPLC, or the like. A method such as a quantitative method, a qualitative method, a confirmation testing method or a purity test method described in various official compendia may be suitably applied, or a method described in publication may be modified and used. The content can also be determined from the indication and description on a product or a product brochure, or a document concerning a factory order, a manufacturing record or an approval and licence.

A beverage embodying the present invention may further comprise components that can be used in foods and drinks, such as polyphenols such as catechins, extracts of plants, caffeine, cinnamaldehyde, and sweeteners (saccharides such as sugar and isomerized liquid sugars, and high intensity sweeteners such as aspartame, sucralose, and acesulfame K), perfumes, acidulants (citric acid, tartaric acid, malic acid, phosphoric acid, and lactic acid), colorants, fruit juices, fruit juice purees, milk, milk products, other flavors, and nutrient supplements (vitamins, calcium, minerals, and amino acids), as long as the components do not inhibit the effect of the present invention. These components may be blended singly or as a combination of a plurality of these components in the beverage.

In the present invention, the kind of beverage is not particularly limited and may be any of carbonated beverages, non-carbonated beverages, alcoholic beverages, non-alcoholic beverages, energy drinks or functional beverages.

When a beverage embodying the present invention is a carbonated beverage (that is, effervescent), the carbonation method is not particularly limited and carbonic acid gas may be produced by fermentation in the beverage or carbonic acid gas may be artificially injected into the beverage. When the carbonic acid gas is injected, the gas pressure at a liquid temperature of 20°C can be, for example, 1 to 5 kgf/cm$^2$, preferably 2 to 5 kgf/cm$^2$, more preferably 3 to 5 kgf/cm$^2$. The carbonic acid gas can be added using a method known by those skilled in the art. The carbonic acid gas pressure in the beverage can be measured, for example, using a Kyoto Electronics Manufacturing Co., Ltd. gas volume analyser GVA-500A.

A beverage embodying the present invention can be filled into a container but is not particularly limited thereto. For the container, a container of any form and material can be used and may be, for example, a bottle, a can, a barrel or a PET bottle. Additionally, the method for filling the beverage into a container is also not particularly limited.

According to another aspect in the embodiment of the present invention, a method for reducing the fading of a caramel colouring in the beverage is provided. The method of the present invention is a method for reducing the fading of a caramel colouring in the beverage, the method comprising the steps of:

(A) adjusting a ratio of a content of RebD and/or RebM to a content of RebA to be 0.45 or more, and
(B) adding a caramel colouring so that Lab values of the beverage are respectively L: 45 to 55, a: 10 to 20, and b: 25 to 35.

In a method embodying the present invention, RebA, RebD and RebM can be blended in the beverage so that the content in the beverage is to be the amount as described above, but not limited thereto. Further, in the method of the present invention, the caramel colouring can also be blended in the beverage so as to be the content as described above, but not limited thereto. The blending order of each component is not particularly limited and each component may be blended simultaneously. The method of the present invention can also include a step of blending the components and materials described above and a step of adjusting the contents thereof. In the method of the present invention, various elements such as the kind and content of the components in the beverage are as described above in the beverage of the present invention and thus obvious therefrom.

The method embodying the present invention can reduce, in beverages containing a caramel colouring, a degree of fading of the caramel colouring.

EXAMPLES

Hereinbelow, details of the present invention are specifically described with reference to Test Examples and Examples. The following description only intends to facilitate understanding of the present invention but does not intend to limit the scope of the present invention.

Beverage samples were prepared as follows to examine degrees of the fading of the caramel colouring in the beverages.

First, caramel IV (Z-80 (Semba Tohka Industries Co., Ltd.)) used as the caramel colouring was added to pure water so that a concentration thereof was 2960 mg/L. Next, RebA, RebD and RebM were added to the obtained caramel colouring-containing solution so that the amounts blended were as shown in the table below. As controls for correcting Lab measured values, caramel colouring-containing solutions to which RebA, RebD and RebM were not added were used. The compositions D0, D3, D100, M0, M30, M50 and M100 are reference compositions.

Table 1

| Sample name | | D0 | D3 | D50 | D70 | D100 | M0 | M30 | M50 | M70 | M100 |
|---|---|---|---|---|---|---|---|---|---|---|---|
| Content (ppm) | RebA | 33.3 | 23.3 | 16.7 | 10.0 | 0 | 33.3 | 23.3 | 16.7 | 10.0 | 0 |
| | RebD | 0 | 10.5 | 17.5 | 24.6 | 35.1 | 0 | 0 | 0 | 0 | 0 |
| | RebM | 0 | 0 | 0 | 0 | 0 | 0 | 10.5 | 17.5 | 24.6 | 35.1 |
| Brix ratio in terms of sucrose | RebA | 100 | 70 | 50 | 30 | 0 | 100 | 70 | 50 | 30 | 0 |
| | RebD | 0 | 30 | 50 | 70 | 100 | - | - | - | - | |
| | RebM | - | - | - | - | - | 0 | 30 | 50 | 70 | 100 |

Lab values (that is, L, a and b values) of the beverage samples and the control samples for correcting Lab measured values were measured using a spectrophotometer (a product of Nippon Denshoku Industries Co., Ltd., SE6000).

Subsequently, each sample was irradiated with light at 55000 lux for 15 hours and 15 minutes in an artificial climate chamber (Nippon Medical & Chemical Instruments Co., Ltd., NC-410HH).

After the light irradiation, Lab values of the beverage samples and the control samples for correcting the Lab measured values were measured again using the above apparatus.

The differences in the Lab values of each beverage sample between before and after the light irradiation were determined, and relative values, when the difference in the Lab values of the control samples for correcting the Lab measured values between before and after the light irradiation was 1, were calculated respectively. Note that the difference in the Lab values was determined using the following formulae.

L value before the light irradiation: L1, L value after the light irradiation: L2
a value before the light irradiation: a1, a value after the light irradiation: a2
b value before the light irradiation: b1, b value after the light irradiation: b2

$$\text{Lab value difference} = ((L2-L1)^2 + (a2-a1)^2 + (b2-b1)^2)^{1/2}$$

The results on examining the differences in the Lab values of each beverage sample are shown in the table below. Additionally, the results for the value of each beverage sample relative to the control sample for correcting the measured Lab values are shown in Figures 1 and 2.

Table 2

| | No. | Before irradiation | | | After irradiation | | | Lab value Difference | Average |
|---|---|---|---|---|---|---|---|---|---|
| | | L | a | b | L | a | b | | |
| Control for correction | 1 | 51.46 | 18.1 | 33 | 66.41 | 10.91 | 39.69 | 17.89 | 17.52 |
| | 2 | 51.46 | 18.1 | 33 | 65.81 | 11.17 | 39.47 | 17.20 | |
| | 3 | 51.46 | 18.1 | 33 | 66.05 | 11.07 | 39.56 | 17.47 | |
| D0 (M0) | 1 | 51.37 | 18.2 | 32.99 | 66.42 | 10.88 | 39.69 | 18.03 | 17.93 |
| | 2 | 51.37 | 18.2 | 32.99 | 66.38 | 10.89 | 39.68 | 17.99 | |
| | 3 | 51.37 | 18.2 | 32.99 | 66.19 | 10.95 | 39.6 | 17.77 | |
| D30 | 1 | 51.7 | 18 | 33.12 | 66.7 | 10.69 | 39.76 | 17.96 | 17.63 |
| | 2 | 51.7 | 18 | 33.12 | 66.11 | 10.97 | 39.56 | 17.28 | |
| | 3 | 51.7 | 18 | 33.12 | 66.45 | 10.83 | 39.69 | 17.67 | |

(continued)

| | No. | Before irradiation | | | After irradiation | | | Lab value Difference | Average |
|---|---|---|---|---|---|---|---|---|---|
| | | L | a | b | L | a | b | | |
| D50 | 1 | 51.76 | 17.97 | 33.17 | 66.26 | 10.86 | 39.61 | 17.39 | 17.43 |
| | 2 | 51.76 | 17.97 | 33.17 | 66.52 | 10.81 | 39.7 | 17.66 | |
| | 3 | 51.76 | 17.97 | 33.17 | 66.17 | 10.97 | 39.58 | 17.26 | |
| D70 | 1 | 51.71 | 18.01 | 33.15 | 66.39 | 10.86 | 39.66 | 17.58 | 17.43 |
| | 2 | 51.71 | 18.01 | 33.15 | 66.08 | 10.99 | 39.55 | 17.23 | |
| | 3 | 51.71 | 18.01 | 33.15 | 66.31 | 10.86 | 39.62 | 17.50 | |
| D100 | 1 | 51.57 | 18.1 | 33.1 | 66.14 | 10.99 | 39.59 | 17.46 | 17.58 |
| | 2 | 51.57 | 18.1 | 33.1 | 66.22 | 10.94 | 39.61 | 17.56 | |
| | 3 | 51.57 | 18.1 | 33.1 | 66.36 | 10.85 | 39.63 | 17.72 | |
| M30 | 1 | 51.5 | 17.97 | 33 | 66.34 | 10.83 | 39.62 | 17.75 | 17.58 |
| | 2 | 51.5 | 17.97 | 33 | 66.34 | 10.78 | 39.61 | 17.77 | |
| | 3 | 51.5 | 17.97 | 33 | 65.91 | 11.08 | 39.48 | 17.24 | |
| M50 | 1 | 51.66 | 17.96 | 33.1 | 66.52 | 10.76 | 39.69 | 17.78 | 17.56 |
| | 2 | 51.66 | 17.96 | 33.1 | 66.15 | 10.93 | 39.56 | 17.35 | |
| | 3 | 51.66 | 17.96 | 33.1 | 66.32 | 10.89 | 39.63 | 17.54 | |
| M70 | 1 | 51.67 | 17.97 | 33.11 | 66.23 | 10.91 | 39.59 | 17.43 | 17.43 |
| | 2 | 51.67 | 17.97 | 33.11 | 66.33 | 10.85 | 39.64 | 17.56 | |
| | 3 | 51.67 | 17.97 | 33.11 | 66.11 | 10.97 | 39.56 | 17.29 | |
| M100 | 1 | 51.6 | 18 | 33.07 | 66.29 | 10.91 | 39.63 | 17.58 | 17.63 |
| | 2 | 51.6 | 18 | 33.07 | 66.18 | 10.92 | 39.56 | 17.46 | |
| | 3 | 51.6 | 18 | 33.07 | 66.52 | 10.78 | 39.71 | 17.86 | |

As shown in Figures 1 and 2, the degree of the fading of the caramel colouring was reduced by replacing a part or all of the content of RebA with RebD or RebM. Particularly, the degree of the fading of the caramel colouring was reduced when the Brix ratio in terms of sucrose of RebD or RebM to RebA ((RebD or RebM)/RebA) is 3/7 or more, that is, a mass ratio of 0.45 or more. Note that it was demonstrated that the D50, D70 and D100 beverage samples had reduced fading with statistically significant differences from the D0 (that is, RebA ratio of 100%) beverage sample. Similarly, it was demonstrated that the M70 beverage sample had reduced fading with statistically significant difference to the M0 (that is, RebA ratio of 100%) beverage sample.

Further, as for RebM, it is revealed that the higher the ratio of RebM to RebA becomes, the smaller the entire number of moles becomes, as shown in the table below. However, despite the entire number of moles becoming smaller, the degree of the fading of the caramel colouring ended up being reduced when the RebM ratio became higher. This is presumably attributed to RebM being the compound of a larger molecular weight than RebA, thereby blocking the caramel colouring more from the light.

Table 3

| Sample name | | M0 | M30 | M50 M70 | | M100 |
|---|---|---|---|---|---|---|
| Content (ppm) | RebA | 33.3 | 23.3 | 16.7 | 10 | 0 |
| | RebM | 0 | 10.5 | 17.5 | 24.6 | 35.1 |
| Content (mol) | RebA | 1.72E-06 | 1.20E-06 | 8.63E-07 | 5.17E-07 | 0 |
| | RebM | 0 | 4.07E-07 | 6.78E-07 | 9.53E-07 | 1.36E-06 |

(continued)

| Sample name | M0 | M30 | M50 M70 | | M100 |
|---|---|---|---|---|---|
| Total (mol) | 1.72E-06 | 1.61E-06 | 1.54E-06 | 1.47E-06 | 1.36E-06 |

**Claims**

1. A beverage meeting the following conditions (A) and (B):

 (A)

   (i) the ratio of a content of RebD to a content of RebA is 1 to 20; or
   (ii) a ratio of content of RebM to a content of RebA is 2.2 to 9.5, and

 (B) a caramel colouring is contained such that Lab values of the beverage are respectively L: 45 to 55, a: 10 to 20 and b: 25 to 35.

2. A beverage according to claim 1 wherein the ratio of condition (A) (i) is 1 to 9.5; or the ratio of the condition (A) (ii) is 2.2 to 2.8.

3. A beverage according to claim 1 or 2 wherein the caramel colouring is caramel IV.

4. A beverage according to any one of claims 1 to 3 having Brix (in terms of sucrose) of 1 to 15.

**Patentansprüche**

1. Getränk, das die folgenden Bedingungen (A) und (B) erfüllt:

 (A)

   (i) das Verhältnis eines Gehalts von RebD zu einem Gehalt von RebA beträgt 1 bis 20; oder
   (ii) ein Verhältnis eines Gehalts von RebM zu einem Gehalt von RebA beträgt 2,2 bis 9,5; und

 (B) ein Karamell-Farbstoff ist enthalten, sodass Lab-Werte des Getränks jeweils die folgenden Werte aufweisen: L: 45 bis 55; a: 10 bis 20 und b: 25 bis 35.

2. Getränk nach Anspruch 1, wobei das Verhältnis von Bedingung (A) (i) 1 bis 9,5 beträgt; oder das Verhältnis der Bedingung (A) (ii) 2,2 bis 2,8 beträgt.

3. Getränk nach Anspruch 1 oder 2, wobei der Karamell-Farbstoff Caramel IV ist.

4. Getränk nach einem der Ansprüche 1 bis 3, das einen Brix-Wert (bezogen auf Saccharose) von 1 bis 15 aufweist.

**Revendications**

1. Boisson satisfaisant aux conditions (A) et (B) suivantes :

 (A)

   (i) le rapport entre une teneur en RebD et une teneur en RebA est de 1 à 20 ; ou
   (ii) un rapport entre une teneur en RebM et une teneur en RebA est de 2,2 à 9,5, et

 (B) un colorant au caramel est contenu de telle sorte que les valeurs Lab de la boisson sont respectivement L : 45 à 55, a : 10 à 20 et b : 25 à 35.

**2.** Boisson selon la revendication 1, dans laquelle le rapport de la condition (A) (i) est de 1 à 9,5 ; ou le rapport de la condition (A) (ii) est de 2,2 à 2,8.

**3.** Boisson selon la revendication 1 ou 2, dans laquelle le colorant au caramel est du caramel IV.

**4.** Boisson selon l'une quelconque des revendications 1 à 3, ayant un degré Brix (en termes de saccharose) de 1 à 15.

# Figure 1

# Figure 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009517043 A
- WO 2014186250 A1
- WO 2012504552 A
- US 8414949 B

**Non-patent literature cited in the description**

- **INDRA PRAKASH et al.** Development of Next Generation Stevia Sweetener: Rebaudioside M. *FOODS,* 27 February 2014, vol. 3 (1), 162-175
- *Foods,* 2014, vol. 3 (1), 162-175